# FASCICULE DE BREVET EUROPEEN

(11) **EP 3 794 272 B1**
(45) Date de publication et mention de la délivrance du brevet: **09.11.2022**
(21) Numéro de dépôt: 19730865.3
(22) Date de dépôt: 09.05.2019
(51) Int. Cl.: F17C 13/04

(54) **PROCEDE DE DETECTION DE FUITE DANS UNE TETE DE RESERVOIR DE GAZ SOUS PRESSION ET TETE DE RESERVOIR PERMETTANT D'UTILISER UN TEL PROCEDE**
VERFAHREN ZUR ERKENNUNG VON LECKS IN EINEM DRUCKGASTANKKOPF UND TANKKOPF ZUR VERWENDUNG EINES SOLCHEN VERFAHRENS
METHOD FOR DETECTING LEAKS IN A PRESSURISED GAS TANK HEAD AND TANK HEAD FOR USE OF SUCH A METHOD

(30) Priorité: 14.05.2018 FR 1800497
(43) Date de publication de la demande: 24.03.2021
(73) Titulaire: AD VENTA, 26300 Châteauneuf-sur-Isère (FR)
(72) Inventeur: MUSSOT, Jean-Luc, 26100 Valence (FR); JOLY, Antoine, 26000 Valence (FR)
(74) Mandataire: Novagraaf Technologies
(86) Numéro de dépôt international: PCT/FR2019/000073
(87) Numéro de publication internationale: WO 2019/220024

(56) Documents cités:
- EP-A1- 2 631 460
- EP-A1- 3 196 533
- FR-A1- 2 926 871
- FR-A1- 2 974 883
- US-A1- 2011 233 218

## Description

La présente invention a pour objet un procédé de détection de fuite dans une tête de réservoir de gaz sous pression comportant divers organes intégrés, et une tête de réservoir permettant d'utiliser un tel procédé.

Le secteur technique concerné par l'invention est le domaine de la fabrication et de l'utilisation de têtes de réservoirs de gaz sous pression, en particulier d'hydrogène, et des procédés et des dispositifs de détection de fuite de gaz dans de telles têtes, en particulier celles qui intègrent différents composants ou organes de traitement, de distribution et/ou d'arrêt de ce gaz tels que des raccords, des fusibles thermiques, des capteurs, des parties de détendeur, des vannes, et/ou des bouchons obturant des orifices communiquant vers l'extérieur...

Ces composants ou organes internes à la tête de réservoir sont alimentés en gaz depuis l'intérieur du réservoir de gaz sur lequel la tête est fixée, et comprennent chacun, par sécurité, au moins deux dispositifs d'étanchéité, l'un dit amont et l'autre dit aval, ce qui est souvent le cas dans les équipements devant recevoir de l'hydrogène à haute pression.

Dans ce domaine des têtes de réservoirs de gaz sous pression on peut citer par exemple :
- le brevet FR3003627 du même déposant que pour la présente demande de brevet, intitulé « tête de réservoir de gaz sous pression » et auquel on pourra utilement se référer,
- ou le brevet EP1943454 de la société Air Liquide, intitulé « ensemble comprenant un réservoir pour fluide sous pression et un dispositif de commande du remplissage et/ou du soutirage » et qui enseigne une tête de remplissage et de distribution comprenant un dispositif de pré-détente intégré (avec au moins une partie située à l'intérieur du volume du réservoir).

FR2974883A1 divulgue un procédé de détection de fuite dans une tête de réservoir de gaz.

Dans de telles têtes de réservoir comportant divers composants et organes intégrés, avec double étanchéité, il est difficile si ce n'est impossible de pouvoir contrôler l'étanchéité de tous les organes et composants ainsi intégrés, sauf certes suivant des procédés et dispositifs pouvant être mis en œuvre hors utilisation, tels que:
- en enveloppant l'ensemble du réservoir et de sa tête d'une pellicule permettant alors de détecter s'il y a une fuite telle que par colorimétrie comme enseignée dans la demande de brevet WO200542129 de la Sté ATMI,
- ou en coiffant toute la tête du réservoir par une cloche prenant étanchéité sur le réservoir autour de la tête et en détectant le gaz qui pourrait alors s'échapper dans cette cloche comme enseigné dans la demande de brevet FR2034202 de la Sté Primagaz.

Les inconvénients sont que de tels procédés et dispositifs sont assez envahissants et surtout ne peuvent donc pas être utilisés pendant l'utilisation de ces réservoirs de gaz en opération, c'est-à-dire avec leur tête connectée à un circuit de distribution du gaz contenu dans le réservoir.

On pourrait également citer la demande de brevet FR2974883 de la société Michelin qui enseigne une vanne, montée sur un réservoir contenant un gaz sous pression, et comprenant divers composants dont un détendeur, une électrovanne contrôlant l'alimentation de sortie en gaz basse pression et un détecteur de fuite de gaz (intégré ou non à la vanne) permettant de couper l'alimentation de l'électrovanne et/ou d'activer une évacuation des gaz qui se sont échappés du fait de la fuite, et donc certes pendant l'utilisation du réservoir de gaz en opération, c'est-à-dire avec sa tête connectée à un circuit de distribution du gaz contenu dans ce réservoir.

Le problème posé et l'objectif de la présente invention sont alors de pouvoir réaliser, sans les inconvénients des dispositifs précédemment cités et sans qu'il y ait forcément une électrovanne, un contrôle d'étanchéité par détection de fuite dans une tête de réservoir de gaz sous pression, comportant plusieurs composants et organes intégrés, et cela d'une part sans avoir à contrôler chaque organe séparément comme on pourrait l'envisager mais ce qui serait assez complexe, et d'autre part même en opération et au cours de la distribution de gaz, ce qui est essentiel surtout quand le gaz est de l'hydrogène et que l'utilisateur doit absolument être averti dès qu'il y a une fuite (ce qui peut se produire même après un contrôle avant utilisation) sur un dispositif d'étanchéité d'un de ses composants ou organes intégrés.

Une solution au problème posé est une tête de réservoir de stockage de gaz sous pression, apte à être fixée directement et d'une manière amovible sur un tel réservoir et qui comprend d'une manière intégrée, dans le corps même de la tête, au moins deux organes de traitement, de distribution et/ou d'arrêt de ce gaz, un connecteur amont apte à se fixer d'une manière amovible dans un bossage du dit réservoir et à l'intérieur duquel est situé et débouche au moins un conduit d'alimentation de la tête de réservoir et des conduits de sortie avals aptes à relier la tête de réservoir à tout système utilisant le dit gaz à travers les dits organes, et telle que suivant l'invention:
- chaque organe comporte au moins deux dispositifs d'étanchéité, l'un dit amont et l'autre dit aval, qui délimitent entre eux un espace intermédiaire,
- au moins un conduit dit de piquage relie chacun des dits espaces intermédiaires et un espace commun dans lequel débouche tous les conduits de piquage,
- un orifice fait communiquer l'espace commun avec un dispositif de mesure de la présence du gaz.

L'objectif de la présente invention est également atteint par un procédé de détection de fuite dans une tête de réservoir de gaz sous pression telle que décrite ci-dessus et tel que:
- on relie chacun des dits espaces intermédiaires, délimités entre chaque dispositif d'étanchéité amont et chaque dispositif d'étanchéité aval de tous les organes et composants intégrés dans la dite tête, à un espace commun,
- on fait communiquer tous les espaces intermédiaires avec le même dit espace commun qui ne contient initialement pas de traces du dit gaz,
- on fait communiquer l'espace commun avec un dispositif de détection de la présence du dit gaz,
- on met en opération la distribution du gaz par le dit réservoir à travers la dite tête de réservoir,
- si on détecte alors en cours d'opération la présence de gaz, qui n'y était pas au début de l'opération, par le dispositif de détection, on en déduit qu'au moins un des dispositifs d'étanchéité d'un des dits organes fuit.

Ainsi une telle détection de fuite se faisant avant que le deuxième dispositif d'étanchéité puisse lui aussi fuir, un tel procédé et un tel dispositif garantissent la sécurité de l'atmosphère entourant la tête de réservoir de stockage, surtout quand le gaz est de l'hydrogène et que cette atmosphère est confinée comme dans un avion, un engin de chantier sous-terrain...

De plus, dans un mode particulier de réalisation pour éviter le risque de fuite, en cas de défaillance d'un joint amont, de l'espace commun lui-même dans l'atmosphère entourant la tête de réservoir, on évacue, par exemple au-dessus d'une pression prédéterminée, le gaz de fuite pouvant s'échapper dans cet espace commun vers toute zone sécurisée, soit hors de l'atmosphère entourant la tête de réservoir de stockage, tel que hors de la carlingue dans le cas d'un avion.

Le résultat est un nouveau procédé de détection de fuite dans une tête de réservoir de gaz sous pression comportant divers organes intégrés, et une nouvelle tête de réservoir de gaz permettant d'utiliser un tel procédé, qui répondent au problème posé et à l'objectif exposé précédemment ci-dessus, en particulier dans des utilisations dans des atmosphères confinés et quand le gaz utilisé est de l'hydrogène.

On pourrait citer d'autres avantages de la présente invention mais ceux cités ci-dessus en montrent déjà suffisamment pour en prouver l'intérêt.

La description ci-après et les figures jointes représentent un exemple de réalisation de l'invention, mais n'ont aucun caractère limitatif : d'autres réalisations sont possibles dans le cadre de la portée et de l'étendue de cette invention telle que définie par les revendications jointes ci-après.

La figure 1 est une vue en coupe axiale d'un exemple de mode de réalisation d'une tête-détendeur de réservoir suivant l'invention.

La figure 2 est une vue de dessus de la seule et même tête de réservoir que la figure 1.

La figure 3 est une vue agrandie d'une partie de la figure 1.

Dans la présente description, on positionne et on qualifie les différents composants par les termes aval et amont pris dans le sens de l'écoulement du gaz depuis donc la chambre 3 du réservoir 1 de stockage vers l'extérieur 10 de la tête 2 de réservoir suivant l'invention.

Celle-ci comprend d'une manière intégrée et compacte dans un même corps, sensiblement tubulaire, tel que cylindrique d'axe XX', et réalisé en matériau compatible et étanche aux gaz, tel que l'hydrogène :
- au moins deux organes 13₁,13₂ de traitement, de distribution et/ou d'arrêt de ce gaz, tels qu'un bouchon, un raccord, un fusible thermique, un capteur, une partie d'un détendeur, etc...
- un connecteur amont 20 apte à se fixer d'une manière amovible, tel que par vissage 11, et étanche, grâce à au moins un joint 6 circulaire de type torique positionné dans une gorge, dans l'orifice 5 d'un bossage 4 du dit réservoir 1 et à l'intérieur duquel est situé et débouche au moins un conduit d'alimentation 9 de gaz depuis la chambre 3 de stockage du réservoir, et
- des conduits de sortie 21₁,21₂ avals aptes à relier la tête 2 de réservoir à tout système utilisant le dit gaz une fois qu'il a traversé les dits organes 13₁,13₂, depuis le au moins conduit d'alimentation 9 et suivant l'invention :
- chaque organe 13₁,13₂ comporte au moins deux dispositifs 14₁,14₂ d'étanchéité (l'un 14₁ étant amont et l'autre 14₂ étant aval) qui délimitent entre eux un espace intermédiaire,
- au moins un conduit 12 dit de piquage relie chacun des dits espaces intermédiaires et un espace commun 8 dans lequel débouche tous les conduits de piquage 12,
- un orifice 15 fait communiquer l'espace commun 8 avec un dispositif 16 de détection de la présence du gaz, tel qu'un capteur de pression, mais ce peut être tout autre moyen de détection.

Le principe de fonctionnement d'une telle tête de réservoir est parfaitement connu de l'homme du métier et nous ne l'expliquerons pas ici, sauf bien sûr en ce qui concerne l'objet de l'invention.

De plus suivant la présente invention et dans le cas où l'extérieur 10 entourant la tête 2 de réservoir est un espace confiné comme dans un avion ou un engin de chantier sous-terrain et où il serait dangereux d'y laisser fuiter un gaz comme de l'hydrogène, la tête 2 de réservoir comporte un orifice d'évacuation 15 entre l'espace commun 8, dans lequel débouche tous les conduits de piquage 12, et tout conduit (non représenté sur les figures) reliant la dite tête 2 et toute zone sécurisée extérieure, soit hors de l'atmosphère 10 entourant la tête de réservoir de stockage, tel que hors de la carlingue dans le cas d'un avion.

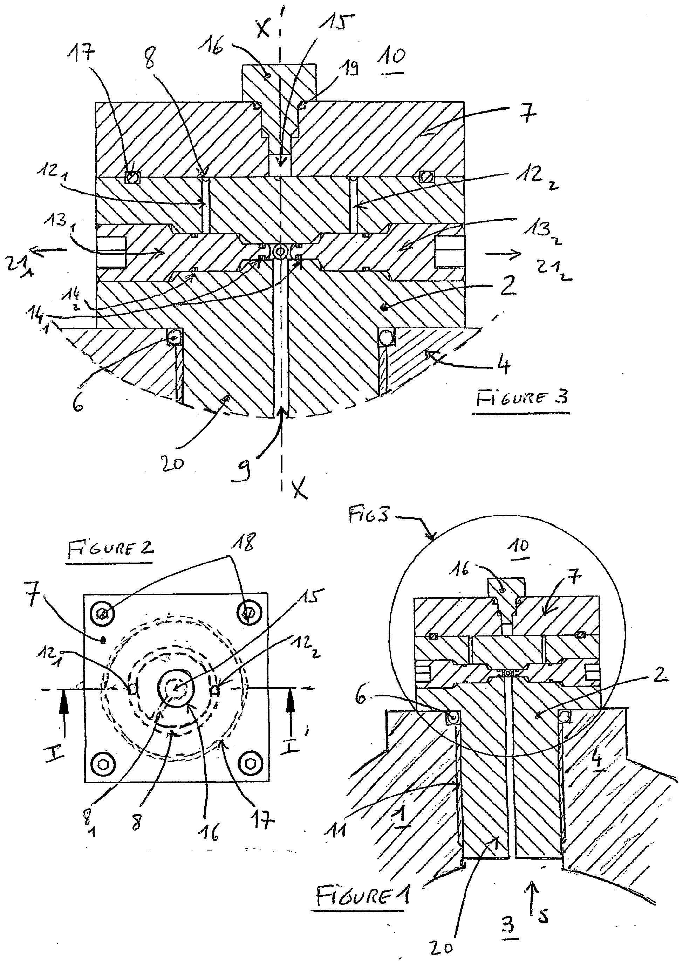

Dans un mode préférentiel de réalisation, cet orifice d'évacuation 15 entre l'espace commun 8 et tout conduit reliant ladite tête 2 et le même que celui, représenté sur la figure 3, faisant communiquer l'espace commun 9 avec le dispositif 16 de détection de la présence du gaz qui est représenté ici comme un obturateur de cet orifice d'évacuation 15.

Dans le mode de réalisation des figures jointes, l'espace commun 8, dans lequel débouchent tous les conduits de piquage 12, est une gorge circulaire réalisée sur le dessus de la tête 2 de réservoir et fermée sur sa face supérieure par un capot 7 étanche.

Celui-ci est représenté sur les figures 1 et 3 comme une pièce assez épaisse, qui peut être métallique et qui est fixée, par tout moyen tel que quatre vis 18 représentées seulement en vue de dessus sur la figure 2, d'une manière étanche, grâce un joint circulaire 17 entourant la gorge commune 8, sur le dessus de la tête 2 de réservoir.

Ce capot 7 comporte au moins l'orifice 15 faisant communiquer l'espace commun 8 avec le dispositif 16 de détection de la présence du gaz qui est lui-même fixé, d'une manière étanche grâce à un joint 19, à la sortie du dit orifice 15 qui est en fait ici un alésage réalisé dans l'épaisseur du capot 7.

Ce capot 7 pourrait être aussi plus mince, ou même être un simple couvercle de type plastique moulé avec par exemple un joint à façon qui servirait de canaux de communication et d'espace commun 8 entre les différents orifices 12,15 ; il pourrait ainsi ne pas tenir la pression qui pourrait augmenter en cas de fuite dans l'espace commun 8, une soupape de décharge pouvant lors être prévue pour évacuer le gaz vers l'extérieur 10 ou à travers un conduit d'évacuation vers une zone de sécurité comme indiqué précédemment.

Dans un autre mode de réalisation ce capot 7 pourrait être même réalisé dans le corps même de la tête 2 de réservoir et ne constituerait alors en ce cas qu'une seule pièce avec elle sans joint : celle-ci pourrait alors être fabriquée, par exemple,
- soit par impression 3D directement avec tous les conduits internes nécessaires,
- soit en réalisant_l'espace commun 8 et les conduits 12 de piquage par des perçages qui doivent être ensuite rebouchés partiellement une fois communiquant tous entre eux et en ne laissant qu'un seul perçage débouché pour constituer l'orifice 15 faisant communiquer l'espace commun 8 avec le dispositif 16 de détection de la présence du gaz.

Ainsi quel que soit le mode de réalisation de ladite tête 2 de réservoir suivant l'invention, quand on met en opération la distribution du gaz par le dit réservoir 1 à travers cette tête 2 de réservoir,
- si on détecte alors en cours d'opération la présence d'un gaz, qui n'y était pas en début d'opération, par le dispositif de détection 16, on en déduit qu'au moins un des dispositifs 14₁ d'étanchéité d'un des dits organes 13 fuit,
- dans un mode particulier de réalisation, on détecte la présence de gaz dans l'espace commun 8 en mesurant la pression dans cet espace,
- on évacue 15 ensuite, si cette pression est supérieure à celle de la pression externe 10 à la tête de réservoir, le gaz de fuite s'échappant dans l'espace commun 8, tel que par une soupape de décharge quand on mesure que la pression dans cet espace dépasse un seuil donné, soit vers l'extérieur 10 soit, suivant les utilisations, à travers un conduit d'évacuation vers une zone de sécurité comme indiqué précédemment.

De plus, suivant les conditions de pression, si on veut savoir si c'est un joint amont d'un des dits organes 13 qui est défaillant (ce qui est le plus critique) et non un joint aval, on peut lever le doute suivant l'un des procédés ci-après :
- soit on fait le vide dans l'espace commun 8 et les espaces intermédiaires et si la pression dans cet espace devient la pression extérieure 10 à la tête 2 de réservoir (telle que la pression atmosphérique), c'est que c'est un joint aval qui est défaillant, mais si au contraire cette pression mesurée devient supérieure à la pression extérieure c'est un joint amont qui est défaillant,
- soit on met cet espace commun 8 à une pression intermédiaire entre la pression à l'extérieur 10 et la pression minimale admissible du réservoir, et si la pression mesurée dans cet espace commun 8 baisse alors, c'est que c'est un joint aval qui est défaillant mais si la pression mesurée augmente, c'est bien un joint amont qui est défaillant,
- soit on se contente de mettre dans cet espace commun 8 un gaz différent de celui contenu dans la bouteille (tel qu'à une pression égale à la pression à l'extérieur 10 et en tout cas inférieure à celle du gaz contenu dans le réservoir), et si on détecte la présence du dit gaz contenu dans le réservoir tel que par l'augmentation de la pression mesurée dans cet espace commun 8, on en déduit que c'est bien un joint amont d'un des dits organes 13 qui est défaillant.

## Revendications

1. Procédé de détection de fuite dans une tête (2) de réservoir de gaz sous pression apte à être fixée directement et d'une manière amovible sur un tel réservoir (1) et que l'on réalise en assemblant d'une manière intégrée :
- au moins deux composants ou organes (13₁,13₂) de traitement, de distribution et/ou d'arrêt de ce gaz,
- un connecteur amont (20) apte à se fixer d'une manière amovible dans un bossage (4) du dit réservoir (1) et à l'intérieur duquel est situé et débouche au moins un conduit d'alimentation (9) de la tête (2) de réservoir depuis sa chambre (3) de stockage du gaz et,
- des conduits de sortie (21₁,21₂) avals aptes à relier la tête (2) de réservoir à tout système utilisant le dit gaz à travers les dits organes (13₁,13₂), **caractérisé en ce que** :
- on utilise pour chaque organe (13₁,13₂) des organes comportant au moins deux dispositifs (14₁,14₂) d'étanchéité, l'un dit amont (14₁) et l'autre dit aval (14₂), qui délimitent entre eux un espace intermédiaire, on relie chacun des dits espaces intermédiaires à un espace commun (8),
- on fait communiquer (12) tous les espaces intermédiaires avec le même dit espace commun (8) qui ne contient initialement pas de traces du dit gaz,
- on fait communiquer l'espace commun (8) avec un dispositif (16) de détection de la présence du dit gaz,
- on met en opération la distribution du gaz par ledit réservoir (1) à travers la dite tête (2) de réservoir,
- si on détecte alors en cours d'opération la présence d'un gaz, qui n'y était pas en début d'opération, par le dispositif de détection (16), on en déduit qu'au moins un des dispositifs (14₁) d'étanchéité d'un des dits organes (13) fuit.

2. Procédé de détection de fuite suivant la revendication 1 **caractérisé en ce qu'**on met dans l'espace commun 8 un gaz différent de celui contenu dans la bouteille, et si on y détecte ensuite la présence du gaz contenu dans le réservoir, on en déduit que c'est un joint amont d'un des dits organes 13 qui est défaillant.

3. Procédé de détection de fuite suivant l'une quelconque des revendications 1 et 2 **caractérisé en ce qu'**on détecte la présence de gaz dans l'espace commun (8) en mesurant la pression dans cet espace.

4. Procédé de détection de fuite suivant la revendication 3 **caractérisé en ce qu'**on fait le vide dans l'espace commun 8 et les espaces intermédiaires et :
- si la pression dans cet espace devient la pression extérieure 10 à la tête 2 de réservoir, c'est que c'est un joint aval qui est défaillant
- mais si au contraire cette pression mesurée devient supérieure à la pression extérieure c'est un joint amont qui est défaillant,

5. Procédé de détection de fuite suivant la revendication 3 **caractérisé en ce qu'**on met l'espace commun 8 à une pression intermédiaire entre la pression à l'extérieur 10 et la pression minimale admissible du réservoir, et :
- si la pression mesurée dans cette espace commun 8 baisse, c'est que c'est un joint aval qui est défaillant,
- mais si la pression mesurée augmente, c'est un joint amont qui est défaillant.

6. Procédé de détection de fuite suivant l'une quelconque des revendications 1 à 5 **caractérisé en ce que**, si la pression dans l'espace commun (8) est supérieure à celle de la pression externe (10) à la tête de réservoir, on évacue (15) le gaz de fuite s'échappant dans l'espace commun (8) vers toute zone sécurisée.

7. Tête (2) de réservoir de stockage de gaz sous pression apte à être fixée directement et d'une manière amovible sur un tel réservoir (1) et qui comprend d'une manière intégrée :
- au moins deux organes (13₁,13₂) de traitement, de distribution et/ou d'arrêt de ce gaz,
- un connecteur amont (20) apte à se fixer d'une manière amovible dans un bossage (4) du dit réservoir (1) et à l'intérieur duquel est situé et débouche au moins un conduit d'alimentation (9) de la tête (2) de réservoir, et
- des conduits de sortie (21₁,21₂) avals aptes à relier la tête (2) de réservoir à tout système utilisant le dit gaz à travers les dits organes (13₁,13₂), **caractérisé en ce que** :
- chaque organe (13₁,13₂) comporte au moins deux dispositifs (14₁,14₂) d'étanchéité, l'un dit amont (14₁) et l'autre dit aval (14₂), qui délimitent entre eux un espace intermédiaire,
- au moins un conduit (12) dit de piquage relie chacun des dits espaces intermédiaires et un espace commun (8) dans lequel débouche tous les conduits de piquage (12),
- un orifice (15) fait communiquer l'espace commun (8) avec un dispositif (16) de détection de la présence du gaz.

8. Tête (2) de réservoir de stockage de gaz selon la revendication 7, **caractérisé en ce que** le dispositif (16) de détection de la présence du gaz est un capteur de pression.

9. Tête (2) de réservoir de stockage de gaz selon l'une quelconque des revendications 7 et 8, **caractérisé en ce que** la tête (2) de réservoir comporte un orifice d'évacuation (15) entre l'espace commun (8), dans lequel débouche tous les conduits de piquage (12), et tout conduit reliant ladite tête (2) et toute zone sécurisée extérieure.

10. Tête (2) de réservoir de stockage de gaz selon la revendication 9, **caractérisé en ce que** l'orifice d'évacuation (15) entre l'espace commun (8) et tout conduit reliant ladite tête (2) et le même que celui faisant communiquer l'espace commun (9) avec le dispositif (16) de détection de la présence du gaz.

11. Tête (2) de réservoir de stockage de gaz selon l'une quelconque des revendications 7 à 10, **caractérisé en ce que** l'espace commun (8), dans lequel débouche tous les conduits de piquage (12), est une gorge circulaire réalisée sur le dessus de la tête (2) de réservoir et fermée sur sa face supérieure par un capot (7) étanche.

12. Tête (2) de réservoir de stockage de gaz selon la revendication 11, **caractérisé en ce que** le capot (7) est une pièce métallique fixée d'une manière étanche sur le dessus de la tête (2) de réservoir et comportant au moins l'orifice (15) faisant communiquer l'espace commun (8) avec le dispositif (16) de détection de la présence du gaz qui est lui-même fixé à la sortie du dit orifice (15).

## Patentansprüche

1. Verfahren zur Erkennung von Lecks in einem Druckgastankkopf (2), der direkt und entfernbar an einem solchen Tank (1) befestigt werden kann und der durch integrales Zusammensetzen von Folgendem hergestellt wird:
- mindestens zwei Komponenten oder Elemente (13₁, 13₂) zur Behandlung, Verteilung und/oder Absperrung dieses Gases;
- einen stromaufwärtigen Anschluss (20), der entfernbar an einem Vorsprung (4) des Tanks (1) befestigt werden kann und in dessen Innerem sich mindestens eine Zufuhrleitung (9) des Tankkopfs (2) von dessen Gasspeicherkammer (3) befindet und darin mündet; und
- stromabwärtige Ausgangsleitungen (21₁, 21₂), die den Tankkopf (2) über die Elemente (13₁, 13₂) mit jedem das Gas nutzenden System verbinden können,
**dadurch gekennzeichnet, dass**:
- für jedes Element (13₁, 13₂) Elemente genutzt werden, umfassend mindestens zwei Dichtungsvorrichtungen (14₁, 14₂), von denen die eine stromaufwärts (14₁) und die andere stromabwärts (14₂) ist, die zwischen einander einen Zwischenraum begrenzen, jeder dieser Zwischenräume mit einem gemeinsamen Raum (8) verbunden wird,
- alle Zwischenräume mit demselben gemeinsamen Raum (8) in Kommunikation gebracht werden (12), der anfänglich keine Spuren des Gases enthält,
- der gemeinsame Raum (8) mit einer Detektionsvorrichtung (16) zum Detektieren des Vorhandenseins des Gases in Kommunikation gebracht wird,
- die Verteilung des Gases durch den Tank (1) über den Tankkopf (2) in Betrieb gesetzt wird,
- wenn während des Betriebs von der Detektionsvorrichtung (16) das Vorhandensein eines Gases detektiert wird, das dort zu Beginn des Betriebs nicht vorhanden war, abgeleitet wird, dass mindestens eine der Dichtungsvorrichtungen (14₁) eines der Elemente (13) undicht ist.

2. Verfahren zur Erkennung von Lecks nach Anspruch 1, **dadurch gekennzeichnet, dass** in den gemeinsamen Raum 8 ein Gas gegeben wird, das sich von dem in der Flasche enthaltenen unterscheidet, und wenn anschließend das Vorhandensein des im Tank enthaltenen Gases detektiert wird, abgeleitet wird, dass eine stromaufwärtige Dichtung eines der Elemente (13) defekt ist.

3. Verfahren zur Erkennung von Lecks nach einem der Ansprüche 1 und 2, **dadurch gekennzeichnet, dass** das Vorhandensein des Gases im gemeinsamen Raum (8) durch Messen des Drucks in diesem Raum detektiert wird.

4. Verfahren zur Erkennung von Lecks nach Anspruch 3, **dadurch gekennzeichnet, dass** im gemeinsamen Raum 8 und den Zwischenräumen ein Vakuum erzeugt wird und:
- wenn der Druck in diesem Raum der Außendruck 10 am Tankkopf 2 wird, eine stromabwärtige Dichtung defekt ist,
- wenn jedoch dieser gemessene Druck höher als der Außendruck wird, eine stromaufwärtige Dichtung defekt ist.

5. Verfahren zur Erkennung von Lecks nach Anspruch 3, **dadurch gekennzeichnet, dass** der gemeinsame Raum 8 unter einen Zwischendruck, zwischen dem Außendruck 10 und dem zulässigen Mindesttankdruck, gesetzt wird, und:
- wenn der in diesem gemeinsamen Raum 8 gemessene Druck sinkt, eine stromabwärtige Dichtung defekt ist,
- wenn jedoch der gemessene Druck steigt, eine stromaufwärtige Dichtung defekt ist.

6. Verfahren zur Erkennung von Lecks nach einem der Ansprüche 1 bis 5, **dadurch gekennzeichnet, dass** wenn der Druck im gemeinsamen Raum (8) höher als die des Außendrucks (10) am Tankkopf ist, das Leckgas, das im gemeinsamen Raum (8) zu jeder Sicherheitszone entweicht, evakuiert wird (15).

7. Tankkopf (2) zur Druckgasspeicherung, der direkt und entfernbar an einen solchen Tank (1) befestigt werden kann, und der integral Folgendes umfasst:
- mindestens zwei Elemente (13₁, 13₂) zur Behandlung, Verteilung und/oder Absperrung dieses Gases;
- einen stromaufwärtigen Anschluss (20), der entfernbar an einem Vorsprung (4) des Tanks (1) befestigt werden kann und in dessen Innerem sich mindestens eine Zufuhrleitung (9) des Tankkopfs (2) befindet und darin mündet, und
- stromabwärtige Ausgangsleitungen (21₁, 21₂), die den Tankkopf (2) über die Elemente (13₁, 13₂) mit jedem das Gas nutzenden System verbinden können,
**dadurch gekennzeichnet, dass**:
- jedes Element (13₁, 13₂) mindestens zwei Dichtungsvorrichtungen (14₁, 14₂) umfasst, von denen die eine stromaufwärts (14₁) und die andere stromabwärts (14₂) ist, die zwischen einander einen Zwischenraum begrenzen,
- mindestens eine Abzweigungsleitung (12) jeden der Zwischenräume mit einem gemeinsamen Raum (8) verbindet, in den alle Abzweigungsleitungen (12) münden,
- eine Öffnung (15), die den gemeinsamen Raum (8) mit einer Vorrichtung (16) zur Detektion des Vorhandenseins von Gas verbindet.

8. Tankkopf (2) zur Gasspeicherung gemäß Anspruch 7, **dadurch gekennzeichnet, dass** die Vorrichtung (16) zur Detektion des Vorhandenseins von Gas ein Drucksensor ist.

9. Tankkopf (2) zur Gasspeicherung nach einem der Ansprüche 7 und 8, **dadurch gekennzeichnet, dass** der Tankkopf (2) eine Evakuierungsöffnung (15) zwischen dem gemeinsamen Raum (8), in den alle Abzweigungsleitungen (12) münden, und jeder Leitung, die den Tankkopf (2) und alle äußeren Sicherheitszonen verbindet, umfasst.

10. Tankkopf (2) zur Gasspeicherung nach Anspruch 9, **dadurch gekennzeichnet, dass** die Evakuierungsöffnung (15) zwischen dem gemeinsamen Raum (8) und jeder Leitung, die den Tankkopf (2) mit der gleichen, wie die, die den gemeinsamen Raum (9) mit der Vorrichtung (16) zur Detektion des Vorhandenseins von Gas in Kommunikation bringt, verbindet.

11. Tankkopf (2) zur Gasspeicherung nach einem der Ansprüche 7 bis 10, **dadurch gekennzeichnet, dass** der gemeinsame Raum (8), in den jede Abzweigungsleitung (12) mündet, eine kreisförmige Nut ist, die in der Oberseite des Tankkopfs (2) ausgebildet und an ihrer Oberseite durch eine dichte Kappe (7) verschlossen ist.

12. Tankkopf (2) zur Gasspeicherung nach Anspruch 11, **dadurch gekennzeichnet, dass** die Kappe (7) ein Metallstück ist, das auf dichte Art und Weise auf der Oberseite des Tankkopfs (2) befestigt ist und mindestens die Öffnung (15) umfasst, die den gemeinsamen Raum (8) mit der Vorrichtung (16) zur Detektion des Vorhandenseins von Gas verbindet, die ihrerseits am Ausgang dieser Öffnung (15) befestigt ist.

## Claims

1. Method for detecting leak in a pressurised gas tank head (2) suitable for being directly and removably attached on such a tank (1) and that is carried out by assembling, in an integrated manner:
- at least two components (13₁,13₂) for treating, distributing and/or shutting off said gas;
- an upstream connector (20) suitable for being removably attached in a boss of said tank (1) and inside which is located and emerges at least one pipe (9) for supplying the head (2) of the tank from its gas storage chamber (3), and
- downstream outlet pipes (21₁,21₂) suitable for connecting the tank head (2) to any system using said gas through the said components (13₁,13₂),
**characterised in that**:
- each component (13₁,13₂) have at least two sealing devices (14₁,14₂), one being upstream (14₁) and the other being downstream (142), which define an intermediate space therebetween, and each of said intermediate spaces is connected to a common space (8),
- all the intermediate spaces communicate (12) with the said same common space (8) which initially contains no traces of the said gas,
- the common space (8) communicates with a device (16) for detecting the presence of the said gas, such as:
- the distribution of the gas by the said tank (1) through the said tank head (2) is put into operation,
- if the presence of a gas, which was not there at the start of the operation, is then detected by the detection device (16) during the operation, it is deduced from this that at least one of the sealing devices (14) of one of the said components (13) leaks.

2. Method for detecting leak according to claim 1, **characterised in that** a gas different from that contained in the tank (1) is placed in the common space (8) and, if the presence of the gas contained in the tank (1) is then detected therein, it is deduced therefrom that it is an upstream seal (14₁) of one of the said components (13) which is faulty.

3. Method for detecting leak according to any one of claims 1 and 2, **characterised in that** the gas is detected in the common space (8) by measuring the pressure in this space.

4. Method for detecting leak according to claim 3, **characterised in that** a vacuum is created in the common space (8) and the intermediate spaces, and:
- if the pressure in this space becomes the external pressure (10) around the tank head (2), it is a downstream seal (142) which is faulty,
- but if, by contrast, this measured pressure becomes greater than the external pressure, it is an upstream seal (14₁) which is faulty.

5. Method for detecting leak according to claim 3, **characterised in that** the common space (8) is placed under an intermediate pressure between the external pressure (10) and the minimum permissible pressure of the tank (1), and
- if the pressure measured in this common space (8) drops, this is because a downstream seal (142) is faulty,
- but if the measured pressure increases, it is an upstream seal (14₁) which is faulty.

6. Method for detecting leak according to any one of claims 1 to 5, **characterised in that** if the pressure in the common space (8) is greater than the external pressure (10) at the tank head (2), the leaking gas escaping into the common space (8) is evacuated (15) to any secure zone.

7. Head (2) of pressurized gas storage tank (1) suitable for being directly and removably attached on such a tank (1) and which comprises in an integrated manner:
- at least two components (13₁,13₂) for treating, distributing and/or shutting off said gas,
- an upstream connector (20) suitable for being removably attached in a boss (4) of the tank (1) and inside which is located and emerges at least one pipe (9) for supplying the head (2) of the tank (1), and
- downstream outlet pipes (21₁,21₂) suitable for connecting the tank head (2) to any system using the said gas, through said components (13₁,13₂), **characterised in that**:
- each component (13₁,13₂) has at least two sealing devices (14₁,14₂), one being upstream (14₁) and the other being downstream (142), which define an intermediate space therebetween,
- at least one pipe (12), called tapping pipe, connects each of the said intermediate spaces and a common space (8) into which all the tapping pipes (12) emerge,
- an orifice (15) communicates the common space (8) with a device (16) for detecting the presence of gas.

8. Head (2) of pressurized gas storage tank (1) according to claim 7, **characterised in that** the device (16) for detecting the presence of the gas is a pressure sensor.

9. Head (2) of pressurized gas storage tank (1) according to any one of claims 7 and 8, **characterised in that** the tank head (2) has an evacuation orifice (15) between the common space (8), into which all the tapping pipes (12) emerge, and any pipe connecting the said head (2) and any external secure zone.

10. Head (2) of pressurized gas storage tank (1) according to claim 9, **characterised in that** the evacuation orifice (15) between the common space (8) and any pipe connecting said head (2) is the same orifice as the one communicating the common space (8) with the device (16) for detecting the presence of the gas.

11. Head (2) of pressurized gas storage tank (1) according to any one of claims 7 to 10, **characterised in that** the common space (8), into which all of the tapping pipes (12) emerge, is a circular groove made on the top of the tank head (2) and closed on its upper face by a sealed cover (7).

12. Head (2) of pressurized gas storage tank (1) according to claim 11, **characterised in that** the cover (7) is a metal part attached in a sealing manner on the top of the tank head (2) and including at least one orifice (15) communicating the common space (8) with the device (16) for detecting the presence of the gas, which is itself attached to the outlet of the said orifice (15).
